Europäisches Patentamt

European Patent Office

Office européen des brevets

(11) Publication number: **0 403 183**
**A2**

# EUROPEAN PATENT APPLICATION

(21) Application number: 90306287.5

(22) Date of filing: 08.06.90

(51) Int. Cl.⁵: **C03B 5/185, C03B 5/187, C03B 5/225**

(30) Priority: 13.06.89 GB 8913539

(43) Date of publication of application:
19.12.90 Bulletin 90/51

(84) Designated Contracting States:
AT BE CH DE DK ES FR GB GR IT LI LU NL SE

(71) Applicant: Pilkington plc
Prescot Road
St. Helens Merseyside WA10 3TT(GB)

(72) Inventor: Martlew, David
15 Cecil Drive, Eccleston
St Helens, Merseyside WA10 5DS(GB)
Inventor: Whitfield, Peter James
58 Rivington Road
St Helens, Merseyside WA10 4NE(GB)

(74) Representative: Palmer, Roger et al
PAGE, WHITE & FARRER 54 Doughty Street
London WC1N 2LS(GB)

(54) **Glass melting.**

(57) A glass melting tank has a primary homogenising chamber 8, a shallow uniflow conditioning chamber 3, a shallow refining chamber 2 and a riser chamber 4 between the melting chamber and refining chamber. Heat is input to glass in the riser chamber 4 by horizontal electrodes 25 located in the riser chamber. Temperature sensors 24,32 sense the temperature entering the riser chamber through a throat 23 and near the base of a downstream wall of the riser chamber and the heat input is controlled to produce torroidal flow in the riser chamber.

*Fig. 2*

EP 0 403 183 A2

# GLASS MELTING

This invention relates to glass melting and is particularly directed to glass melting tanks having a throat.

It is well known for glass melting tanks to include a melting chamber in which solid batch material is heated to produce molten glass before entering a refining chamber in which the molten glass is at a sufficiently high temperature for refining to occur and thereby reduce defects due to impurities or bubble in the glass. Commonly the glass passes from a refining chamber through a conditioning zone in which thermal conditioning by controlled cooling is effected prior to glass leaving the tank through an outlet to a forming process. Such tanks may be used for continuous production of molten glass and are particularly applicable to the production of high quality glass for use in the production of flat glass.

When solely electric heating is used in a melting chamber of such a tank it is normal for the molten glass in the melting chamber to be covered by a cold top of solid batch material which is progressively melted by heat from electrodes immersed in the glass in the melting chamber. The flow path for molten glass from the melting chamber to a refining chamber, when using electric melting may be through a throat located adjacent the base of the melting chamber in order to reduce the probability of unmelted batch material being carried with the molten glass into the refining zone.

It is known to use throated melting tanks in the manufacture of flat glass products such as rolled plate glass melted by fossil fuel firing. It is known to provide a riser chamber after the melting chamber. It is also known to provide heating in such a riser chamber. However, serious problems can arise from unwanted corrosion of refractory walls of the riser chamber by the upward flowing glass, particularly where the riser chamber is increasing the temperature of the molten glass to a suitable refining temperature above that of the glass entering from the melting chamber, such as may be necessary in the production of high quality flat glass.

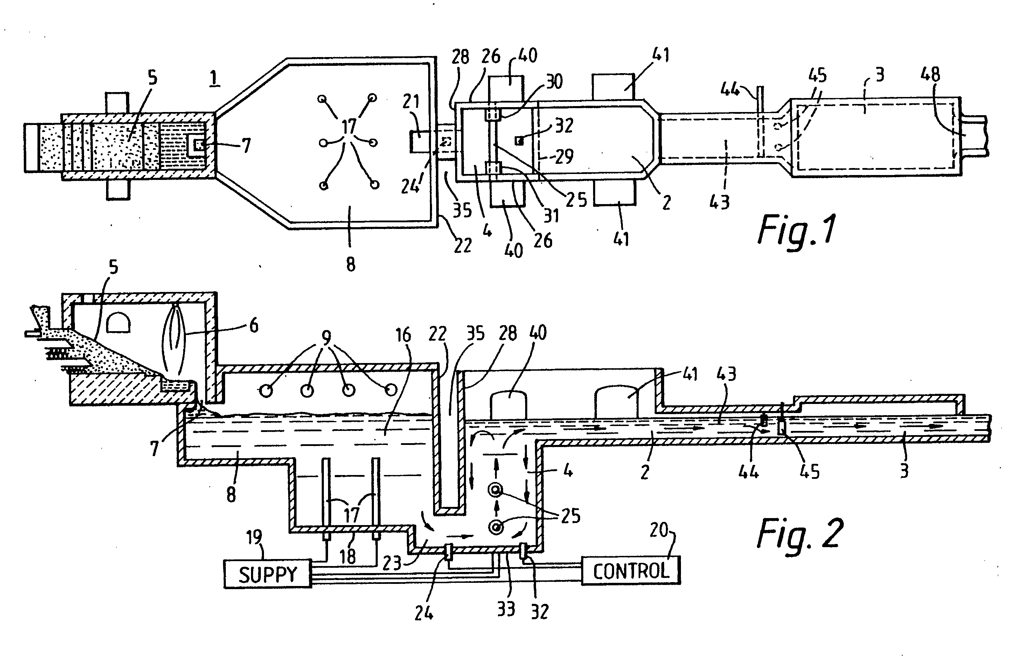

It is also known, for example from Figures 1 and 2 of US Patent 4900337, to use electrodes in a riser chamber forming a conditioning chamber following a throat from a melting chamber. However conditioning involves controlled cooling where electrodes are used to control the rate of loss of temperature of the molten glass rather than raising the bulk temperature above that of the glass leaving the melting chamber. Where the temperature is not raised after passing through the throat into the riser the problems of corrosion in the riser are less severe due to the lower temperatures employed. Such arrangements where the glass temperature is not increased after leaving the melting chamber are more suitable for making glass for containers or fibre glass but may not provide the necessary refining for high quality flat glass production such as that used for a float glass production line.

The flow path of molten glass from the melting chamber to the refining chamber may also be through a throat located adjacent the base of the melting chamber when such a chamber has a batch melting surface as described in our published patent application EP 347 047. That melting chamber has means for forming glass batch material into a pile having an elongate sloping surface, the forming means comprising a feed device for feeding batch material to the pile and a pushing device which is located beneath the feed device and is adapted, in use, to push batch material in the pile towards the elongate sloping surface. Batch may be fed to both the upper and lower parts of the pile. The batch is melted by radiant heat and flows to a primary homogenising chamber in which it is further heated by radiant heat, electric heat or a combination of the two. Glass produced from such a primary homogenising chamber has acceptable levels of solid inclusion faults, but uncceptably high levels of bubble faults for production of high quality flat glass such as float glass.

It is an object of the present invention to provide an improved glass melting tank and an improved method of melting glass which reduces the problem of corrosion in a riser chamber, where glass temperature is increased after leaving a primary homogenising chamber, and enables the glass to be delivered to a shallow refiner and conditioner for reduction of bubble faults. Such arrangements may be used for the production of high quality flat glass.

The present invention provides a method of forming molten glass in a glass melting tank, which method comprises heating batch material in a melting chamber including a primary homogenisation zone to produce molten glass, refining the molten glass in a refining zone and thermally conditioning the glass prior to causing the glass to flow continuously through an outlet from the tank, said method further comprising causing the molten glass to flow through a riser chamber between the primary homogenisation zone and the refining chamber, the glass entering the riser chamber through a throat at the base of the riser chamber and leaving the riser chamber through an outlet at its upper end, the glass being heated in the riser chamber in a central zone spaced from the walls of the riser chamber whereby an inhomogeneous temperature distribution is formed in the glass across the riser chamber and molten glass is caused to flow upwardly in said central zone of the riser chamber with downward glass flow adjacent said chamber walls, the heat input to the glass in the riser chamber being such as to raise the temperature of the glass in the riser chamber and to maintain a glass temperature adjacent the base of the riser chamber opposite said throat which is above the temperature of glass entering the riser chamber through the throat.

Preferably the flow through the riser chamber is toroidal with upward flow in the centre of the toroid and downward flow around the outside of the toroid.

Preferably the method includes sensing the temperature of glass in said throat and sensing the temperature of glass adjacent the base of the riser chamber opposite said throat.

Preferably the method includes cooling upstream and downstream walls of said riser chamber.

Alternatively heat is applied to glass in the riser chamber by a plurality of electrodes extending horizontally across the width of the riser chamber and shrouded to prevent heating near to the walls through which they project. Preferably the horizontal electrodes are mounted in pairs, one above the other as this provides the advantage that heat release is biassed to colder glass near to the lower electrode of the pair which enables an advantageous temperature distribution to be maintained relative to the glass entering the throat. This configuration also provides the advantage of maintaining the integrity of the bottom of the riser chamber and allowing for the shrouds to be water cooled which reduces the possibility of glass leaks around the electrodes.

In a further modification heat is applied to glass in the riser chamber by one or more horizontal molybdenum grillages supported on horizontal shrouded electrodes.

The invention also provides a glass melting tank for continuous supply of molten glass to an outlet at a downstream end of the tank, which tank comprises a melting chamber including a primary homogenising chamber at an upstream end of the tank, a refining chamber, a riser chamber between the primary homogenising and refining chambers, said melting chamber having heating means for melting batch material to produce molten glass and an outlet for molten glass adjacent a base of the melting chamber at a downstream end of the chamber, a throat connecting said outlet to an inlet at a base of said riser chamber arranged to receive molten glass from said melting chamber, said riser chamber having an outlet at its upper end coupled to said refining chamber in which the molten glass is refined, said riser chamber having heating means to raise the temperature of the molten glass and chamber walls including an upstream wall adjacent the inlet from the throat and a downstream wall adjacent the outlet to the refining chamber, together with means to cool both said upstream and downstream walls and heating electrodes extending horizontally across the riser chamber for immersion in molten glass in the riser chamber, said electrodes being shrouded adjacent the chamber walls of the riser chamber whereby an inhomogeneous temperature distribution is formed in the glass across the riser chamber and molten glass is caused to flow upwardly in said central zone of the riser chamber with downward glass flow adjacent said chamber walls and surrounding said upward glass flow, the heating means in the riser chamber being arranged such as to raise the temperature of the glass in the riser chamber and to maintain a glass temperature adjacent the base of the riser chamber opposite said throat which is above the temperature of glass entering the riser chamber through the throat.

Preferably the horizontal electrodes are mounted in pairs, one above the other.

Alternatively the horizontal heating electrodes comprise a grillage supported on horizontal shrouded supports. Preferably the grillage is a rectangular molybdenum grillage supported on short horizontal support electrodes extending through shrouds adjacent the riser wall and most preferably the support electrodes are shaped to retain the grillage in position.

Preferably said riser chamber has upstream and downstream chamber walls spaced respectively from the primary homogenising chamber and refining chamber thereby providing air spaces acting as cooling means for said upstream and downstream walls of the riser chamber.

Preferably a first temperature detector is located adjacent the downstream end of the riser chamber for detecting temperature of molten glass adjacent the base of the riser chamber.

Preferably a second temperature detector is located in said throat for detecting temperature of molten glass passing through the throat.

The aforesaid methods and apparatus of the invention are particularly applicable to the supply of molten glass for the production of high quality flat glass, including for example float glass.

Some embodiments of the invention will now be described by way of example and with reference to the accompanying schematic drawings in which:

Figure 1 is a plan view of a glass melting tank in accordance with the present invention,

Figure 2 is a vertical section through the glass melting tank of Figure 1,

Figure 3 is a view similar to Figure 2 of a different embodiment of the invention, and

Figure 4 is a plan sectional view of the riser of the embodiment shown in Figure 3.

In this example the glass melting tank comprises a melting chamber 1, a refining chamber 2 and a conditioning chamber 3. A riser chamber 4 is located between the melting chamber 1 and the refining chamber 2. The tank is suitable for use in producing high quality flat glass such as float glass.

In use solid batch material for producing glass is supplied through a system such as a hopper system to the top of the melting chamber 1 so that it falls into a pile having an elongate sloping surface 5 which is melted by flame 6 before flowing through drain hole 7 into primary homogenising chamber 8. Heat is supplied to the primary homogenising chamber 8 by flames 9 and by an array of electrodes 17 which are mounted on the base 18 of the primary homogenising chamber and project vertically upwards so as to be immersed in molten glass 16. An electrical supply 19 is connected to the electrodes and controlled by a control unit 20. Molten glass flows out of the primary homogenising chamber 8 through a centrally located exit 21 in the base 18 of the primary homogenising chamber adjacent a downstream wall 22 of the primary homogenising chamber. The exit 21 leads to a submerged throat 23 leading centrally into the lower part of the riser chamber 4. A thermocouple 24 is mounted.in the base of the throat 23 so as to detect the temperature of molten glass in the throat 23. The thermocouple 24 is connected to the control unit 20.

The riser chamber 4 is provided with an array of electrodes 25 which extend between the side walls 26 of the riser chamber so as to be immersed in the molten glass in the riser chamber. The electrodes 25 are arranged to increase the temperature of forward flowing glass so that on leaving the riser 4 the forward flowing glass is at a suitable refining temperature higher than the temperature of the glass entering through the throat 23. The electrodes 25 supply heat to a central zone of the riser chamber 4 and are insulated by means of shrouds 30,31 to prevent heating near side walls 26. The electrodes 25 are also spaced from upstream wall 28 and downstream wall 29 of the riser chamber. In this way no heat is supplied to the molten glass in the riser chamber in the region of any of the walls of the chamber. The electrodes 25 are connected to the power supply 19 and, like the electrodes 17, are arranged to heat the molten glass by the Joule effect. A thermocouple 32 is mounted in the base 33 of the riser chamber close to the downstream wall 29 opposite the throat 23 so as to detect the temperature of molten glass at the bottom of the riser chamber in the region close to the downstream wall 29. The thermocouple 32 is coupled to the control unit 20 so as to control the power supplied to the electrodes 25 in dependence on the temperature detected by the thermocouples 24 and 32. The control 20 provides control of the power supplied to the electrode 25 in the riser chamber 4 independently of the control of the power supplied to the electrode 17 in the molten glass 16. The walls of each chamber in the melting tank are formed of refractory material so as to withstand the molten glass in the tank. The arrangement in the riser chamber 4 is however arranged to minimise corrosion effects from glass passing through the riser chamber from the primary homogenising chamber 8 to the refining chamber 12. The upstream wall 28 of the riser chamber is spaced from wall 22 of the primary homogenising chamber so as to provide an air space 35 which acts as a cooling means for the upstream wall 28 of the riser chamber. Similarly the downstream wall 29 of the riser chamber is separated by an air space 36 from the upstream wall 37 of the refining chamber 12. This air space 36 acts as a cooling means to cool the downstream wall 29 of the riser chamber. The two side walls 26 of the riser chamber are not facing heated chambers such as the melting and refining chambers and thereby permit sufficient cooling of the sides of the riser chamber. By arranging for the air spaces 35 and 36 to cool the upstream and downstream walls of the riser chamber and by shrouding and locating the electrodes 25 so that the heat input in the riser chamber is confined to a central region well spaced from the side walls of the riser chamber, convective flows are formed in the glass passing through the riser chamber as shown in Figure 2. The result is a toroidal flow pattern in which glass in the central region of the riser chamber is caused to flow upwardly surrounded by an annular pattern of downwardly flowing glass adjacent the walls of the riser chamber. In this way, glass entering the riser chamber through the throat 23 may rise in the central flow together with recirculated glass which has descended adjacent the walls of the riser chamber and then ascends in the central upward flow path. The glass which rises in the central region is then divided so that some passes into the refining chamber 2 whereas the remainder is recirculated within the riser chamber in the toroidal pattern. By use of this system, the glass which flows forwardly into the refining chamber has risen through the riser chamber out of contact with the refractory walls of the chamber and therefore has a much reduced likelihood of contamination from corrosion with the side walls. The glass which flows downwardly against the side walls is cooled by virtue of the cooling effect of the air spaces 35 and 36 thereby reducing the likelihood of corrosion with the side walls and any contamination which does result may be reduced as the glass rerises in the hotter central flow as it is recirculated upwardly through the riser chamber. The thermocouples 24 and 32 are operable to control the heat input from the electrodes 25 so as to ensure that there is no build-up of cold glass at the bottom of the riser chamber, particularly starting adjacent the downstream wall 29. Any such build-up of colder glass could gradually restrict the throat 23 causing the forward flowing glass to have a higher velocity on entering the riser chamber and thereby increasing the likelihood of corrosion at the foot of the wall 28 on entering the riser chamber. To minimise corrosion in the riser chamber it is important to avoid glass which enters from the throat 23 rising immediately adjacent the wall 28. Due to the direction of flow through the glass melting tank as a whole the likelihood of corrosion in the riser chamber is greatest on the upstream and downstream walls 28 and 29 but this risk is reduced by the toroidal flow pattern where the cooler downward flowing glass engages these walls. The control effected via the thermocouple 32 is used to ensure that the temperature of molten glass near the base of the riser 4 adjacent the downstream wall 29 and opposite the throat 23 is always higher than the temperature of the glass passing the thermocouple 24 in the throat 23. To achieve the correct temperature distribution in the riser 4 the electrodes 25 are arranged to input heat in the lower part of the riser chamber 4.

The electrodes are arranged with the bottom electrode of the pair located below the centreline of the throat and the upper electrode located about half way up the riser. By virtue of this, heat release is biassed towards the colder glass around the lower electrode and this provides sufficient heat input at this point to prevent build-up of cold glass at the bottom of the riser 4. The water cooled shrouds 30,31 extend horizontally to a distance approximately equal to half the height of the riser 4. If it is desired to use multiple pairs of electrodes then they should be spaced to lie in the middle 80% of the length of the riser 4. The vertical spacing of pairs desirably decreases as they are placed further from upstream wall 28 and closer to downstream wall 29. The lower electrodes may be electrically common and the upper electrodes separately controlled to permit power input to be varied easily. As an alternative the shrouds could be made to be air cooled. The ratio of the volume V of glass in the riser chamber 14 to the glass load L passing through the tank is preferably in the range 1.25 to 2.5 $m^3$hr/tonne. The electrical power required in the riser chamber 14 is typically in the range 40 to 60 kw/$m^3$. The power density for the molybdenum electrodes 25 is typically in the range 20 to 40 kw/$dm^3$ of immersed molybdenum electrodes.

After passing into the refining chamber the molten glass is further heated so as to reduce contamination from impurities and also to release bubbles. Additional heat is applied above the molten glass in the riser chamber 4 and refining chamber 2 by gas burners operating through ports such as those marked at 40 and 41.

The glass melting tank is formed with a tapered waist 43 adjacent the junction between the refining chamber 2 and conditioning chamber 3.

A barrier in the form of a transverse water-cooled pipe 44 extends across the waist and is submerged in the the molten glass. The pipe is water-cooled so as to reduce the temperature of glass entering the thermal conditioning zone 3 and reduces the rate of flow of hot surface glass out of the refining chamber 2 thereby ensuring satisfactory refining. An array of stirrers 45 which may also be water-cooled are located adjacent the water pipe 44 on the downstream side of the pipe. The pipe 44 and stirrers 45 may improve the temperature and homogeneity of the glass entering the conditioning zone 3. The zone 3 is not normally heated and the temperature of the glass is gradually reduced on flowing through the conditioning zone 3 towards an outlet 48 leading to a glass forming process. By use of a refining zone 2 a waist 43 and a conditioning zone 3 all of shallow depth there is only forward flow present beyond the riser zone 4, which reduces energy consumption. The refining zone 3 can alternatively or additionally be heated electrically.

As explained above, the riser chamber 4 in this example is used to raise the temperature of forward flowing glass and is not used for controlled cooling.

The invention is not limited to the details of the foregoing example.

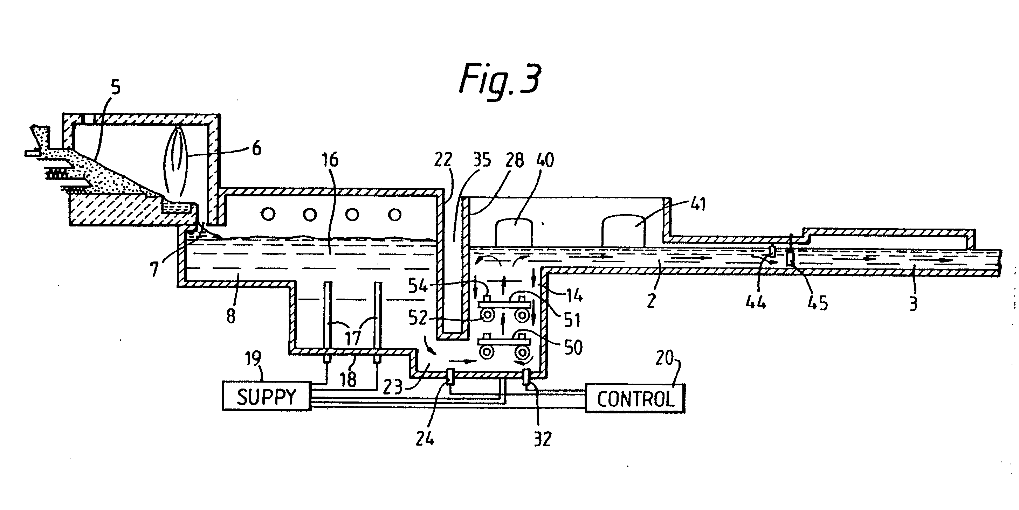

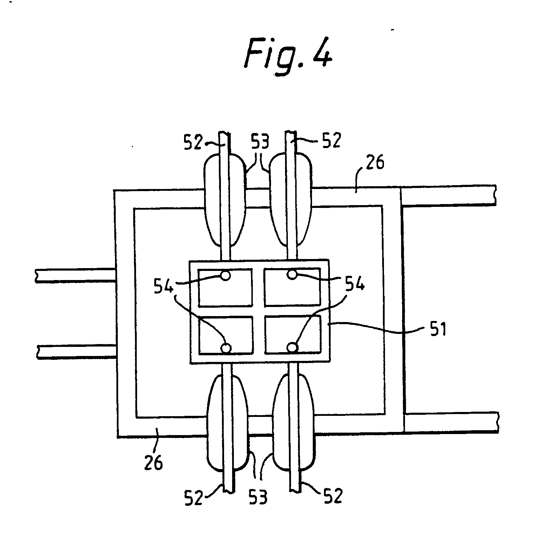

In one alternative embodiment shown in Figures 3 and 4 the riser 4 is heated by rectangular molybdenum grillages 50 and 51 which are each mounted on four horizontal electrodes 52 which pass through side walls 26 and are shrouded by water cooled shrouds 53. The electrodes have upturned extremities 54 which engage and retain the grillage 50,51. The advantage of such a grillage system is that by selection of suitable grills the current density can be controlled to provide a heating profile that will give a very stable toroidal flow whilst allowing the current density to be low enough to ensure the grillage has a long operational life.

In particular, the refining and conditioning zones of the unit may be designed to operate with various flow regimes in the molten glass.

It will further be understood that, if desired, molten glass could be fed to the riser chamber through a plurality of throats, for example from a plurality of melting chambers. Such throats may be through different walls of the riser chamber which need not be of rectangular form and could have a number of walls other than four. A plurality of riser chambers 4 may be provided each supplied by a respective throat. A plurality of risers may be used and may be connected to a common conditioning chamber.

## Claims

1. A method of forming molten glass in a glass melting tank which method comprises heating batch material in a melting chamber including a primary homogenising chamber to produce molten glass, refining the molten glass in a refining zone and thermally conditioning the glass prior to causing the glass to flow continuously through an outlet from the tank, said method further comprising causing the molten glass to flow through a riser chamber between the primary homogenising chamber and the refining chamber, the glass entering the riser chamber through a throat at the base of the riser chamber and leaving the riser chamber through an outlet at its upper end, the glass being heated in the riser chamber in a central zone spaced from the walls of the riser chamber whereby an inhomogeneous temperature distribution is formed in the glass across the riser chamber and molten glass is caused to flow upwardly in said central zone of the riser chamber with downward glass flow adjacent said chamber walls, the heat input to the glass in the riser chamber being such as to raise the temperature of the glass in the riser chamber and to maintain a glass temperature adjacent the base of the riser chamber opposite said throat which is above the temperature of glass entering the riser chamber through the throat.

2. A method according to claim 1 in which the flow through the riser chamber is toroidal with upward flow in the centre of the toroid and downward flow around the outside of the toroid.

3. A method according to claim 1 or claim 2 including sensing the temperature of glass in said throat and sensing the temperature of glass adjacent the base of the riser chamber opposite said throat.

4. A method according to any one of claims 1 to 3 further comprising cooling upstream and downstream walls of said riser chamber.

5. A method according to any preceding claim in which heat is input to glass in the riser chamber by use of electrodes extending horizontally across the riser chamber and shrouded to prevent heating near to the walls through which they project.

6. A method according to claim 5 further comprising detecting temperature of molten glass in the riser chamber adjacent the base of the downstream wall of the chamber and controlling power to said electrodes in said riser chamber in response to said detected temperature.

7. A method according to any one of claims 1 to 6 further comprising detecting the temperature of molten glass flowing through said throat into the riser chamber.

8. A method according to claims 6 and 7 wherein power to electrodes in said riser chamber is controlled in dependence on signals from the temperatures detected.

9. A method according to claim 5 in which the electrodes are mounted in vertically separated pairs.

10. A method according to any one of the preceding claims in which glass enters said refining chamber at a temperature above that of glass entering the riser chamber.

11. A method according to any one of claims 1 to 10 further comprising impeding flow of glass between refining and thermally conditioning by use of a cooling device located in the forward flow of glass.

12. A method according to any one of claims 1 to 11 further comprising stirring glass flowing between refining and thermally conditioning zones.

13. A glass melting tank for continuous supply of molten glass to an outlet at a downstream end of the tank, which tank comprises a melting chamber including a primary homogenising chamber at an upstream end of the tank, a refining chamber, a riser chamber between the primary homogenising and refining chambers, said melting chamber having heating means for melting batch material to produce molten glass and an outlet for molten glass adjacent a base of the melting chamber at a downstream end of the chamber, a throat connecting said outlet to an inlet at a base of said riser chamber arranged to receive molten glass from said melting chamber, said riser chamber having an outlet at its upper end coupled to said refining chamber in which the molten glass is refined, said riser chamber having heating means to raise the temperature of the molten glass and chamber walls including an upstream wall adjacent the inlet from the throat and a downstream wall adjacent the outlet to the refining chamber, together with means to cool both said upstream and downstream walls and heating electrodes extending horizontally across the riser chamber for immersion in molten glass in the riser chamber, said electrodes being shrouded adjacent the chamber walls of the riser chamber whereby an inhomogeneous temperature distribution is formed in the glass across the riser chamber and molten glass is caused to flow upwardly in said central zone of the riser chamber with downward glass flow adjacent said chamber walls and surrounding said upward glass flow, the heating means in the riser chamber being arranged such as to raise the temperature of the glass in the riser chamber and to maintain a glass temperature adjacent the base of the riser chamber opposite said throat which is above the temperature of glass entering the riser chamber through the throat.

14. A glass melting tank according to claim 13 in which the electrodes extending horizontally across the riser chamber are mounted in pairs, one above the other.

15. A glass melting tank according to claim 14 in which the electrodes comprises a grillage mounted on horizontal shrouded supports.

16. A glass melting tank according to any one of claims 13 to 15 in which the shrouds are water cooled.

17. A glass melting tank according to any one of claims 13 to 16 in which said riser chamber has upstream and downstream chamber walls spaced respectively from the melting chamber and refining chamber thereby providing air spaces acting as cooling means for said upstream and downstream walls of the riser chamber.

18. A glass melting tank according to any one of claims 13 to 17 including a first temperature detector located adjacent the downstream end of the riser chamber for detecting temperature of molten glass adjacent the base of the riser chamber.

19. A glass melting tank according to claim 18 further comprising a second temperature detector located in said throat for detecting temperature of molten glass passing through the throat.

20. A glass melting tank according to any one of claims 13 to 19 further comprising control means coupled to said first and second temperature detectors and arranged to control power supply to said electrodes in the riser chamber so as to maintain required glass flow within the riser chamber.

21. A glass melting tank according to any one of claims 13 to 20 further comprising a conditioning chamber connected to said refining chamber for thermally conditioning the glass prior to flowing through an outlet at the downstream end of the tank.

22. A glass melting tank according to claim 21 wherein cooling means are arranged to extend transversely across the upper region of forwardly flowing molten glass adjacent an inlet to the conditioning chamber.

23. A glass melting tank according to claim 22 in which said cooling means comprise a water cooled pipe.

24. A glass melting tank according to claim 22 or claim 23 further including stirring means located in the path of forward flowing glass adjacent the conditioning chamber.

*Fig.1*

*Fig.2*

Fig.3

# Fig. 4